# EUROPEAN PATENT SPECIFICATION

(11) **EP 4 357 058 B1**
(45) Date of publication and mention of the grant of the patent: **01.10.2025**
(21) Application number: 22824763.1
(22) Date of filing: 26.05.2022
(51) Int. Cl.: B23D 53/08, B23D 53/04, B23D 49/00, B23D 49/04, B23D 53/00, B23D 55/04

(54) **STRUCTURE CUTTING SYSTEM AND STRUCTURE CUTTING METHOD**
STRUKTURSCHNEIDESYSTEM UND STRUKTURSCHNEIDEVERFAHREN
SYSTÈME DE COUPE DE STRUCTURE ET PROCÉDÉ DE COUPE DE STRUCTURE

(30) Priority: 14.06.2021 JP 2021098846
(43) Date of publication of application: 24.04.2024
(73) Proprietor: Amada Co., Ltd., Isehara-shi, Kanagawa 259-1196 (JP); Amada Machinery Co., Ltd., Kanagawa 259-1196 (JP)
(72) Inventor: TADOKORO Masahiko, Isehara-shi, Kanagawa 259-1196 (JP)
(74) Representative: Grünecker Patent- und Rechtsanwälte PartG mbB
(86) International application number: PCT/JP2022/021508
(87) International publication number: WO 2022/264769

(56) References cited:
- EP-A1- 3 243 592
- EP-A1- 3 243 592
- WO-A1-2021/170190
- CN-B- 106 625 888
- JP-A- H0 658 020
- JP-A- H0 658 020
- JP-A- H1 034 434
- JP-A- H1 034 434
- US-A1- 2019 009 424
- US-A1- 2020 061 725
- US-A1- 2020 061 725
- US-A1- 2020 340 207
- US-B2- 10 478 992

## Description

### Technical Field

The present disclosure relates to a structure body cutting system and a structure body cutting method.

### Background Art

In recent years, attention has been focused on a wind power generation device with reduced environmental burden. The wind power generation device that has passed its useful life is disassembled, and parts of the wind power generation device such as a blade are discarded. Since the blade and the like are huge structure bodies, they cannot be easily transported, resulting in a great cost. Therefore, it is desired that the huge structure body represented by the blade of the wind power generation device and the like be divided into small pieces before being transported.

For example, Patent Literature 1 discloses a work vehicle equipped with a long processing device.

### Citation List

### Patent Literature

Patent Literature 1: Japanese Patent Application Laid-Open Publication No. JP 5-319164 A.
Further prior art is known from document JP H10 34434 A which discloses a structure body cutting system according to the preamble of claim 1, and comprising a cutting machine having a cutting tool for cutting the workpiece, the workpiece to be cut by said cutting machine and location, and the work mount table having a work rotating device for setting the cutting position by rotating the placed on a workpiece, said cutting machine in the X-axis direction or the Y-axis direction, the workpiece mounting table Y-axis direction or it is characterized in comprising provided movably in the X-axis direction.

### Summary

However, conventionally, no machine has been suitable for dividing the huge structure body. Needless to say, it is also possible to cut the structure body with a hand tool, but it requires a tremendous number of man-hours. In other words, a cutting system suitable for dividing the large structure body is desired.

According to the invention, a structure body cutting system defined by claim 1 and a structure body cutting method defined by claim 9 are provided.

According to the structure body cutting system, since the cutter system and the feeder system are respectively mounted on the first moving body and the second moving body, it is possible to move the cutter system and the feeder system to arbitrary locations. Therefore, the structure body cutting system can be constructed at a location at which a huge structure body exists. As a result, there is no need to spend a large amount of money to transport the huge structure body for cutting. Further, since the first and second moving bodies can separate the cutter system and the feeder system by a required distance, the huge structure body can be appropriately supported by the cutter system and the feeder system. In addition, since the feeder system can send out the structure body to the cutter system as the second moving body moves, the cutter system can cut the huge structure body. As a result, it is possible to divide the huge structure body into small pieces on the spot.

According to the invention, it is possible to provide the cutting system suitable for dividing the huge structure body.

### Brief Description of Drawings

[Figure 1] Figure 1 is a side view schematically showing a configuration of a structure body cutting system according to the present embodiment.
[Figure 2] Figure 2 is a top view schematically showing the configuration of the structure body cutting system according to the present embodiment.
[Figure 3] Figure 3 is an explanatory diagram showing the configuration of a cutter of a cutter system.
[Figure 4] Figure 4 is an explanatory diagram showing the configuration of the cutter of the cutter system.
[Figure 5] Figure 5 is a diagram for explaining a structure body cutting method according to the present embodiment.
[Figure 6] Figure 6 is a diagram for explaining the structure body cutting method according to the present embodiment.
[Figure 7] Figure 7 is a diagram for explaining the structure body cutting method according to the present embodiment.
[Figure 8] Figure 8 is a diagram for explaining the structure body cutting method according to the present embodiment.
[Figure 9] Figure 9 is a diagram for explaining the structure body cutting method according to the present embodiment.
[Figure 10] Figure 10 is a diagram for explaining the structure body cutting method according to the present embodiment.
[Figure 11] Figure 11 is a diagram showing a relationship between the cutter system and the feeder system.
[Figure 12] Figure 12 is an explanatory diagram showing a modified example of the cutter system.
[Figure 13] Figure 13 is an explanatory diagram showing a modified example of the feeder system.

### Description of Embodiment

A structure body cutting system, a structure body cutting method, and a cutter system according to the present embodiment will be described below with reference to the drawings.

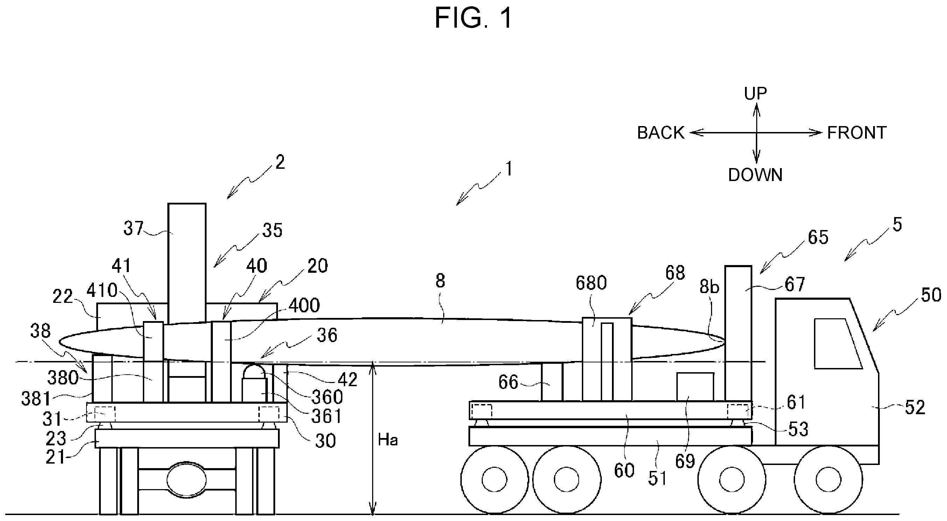

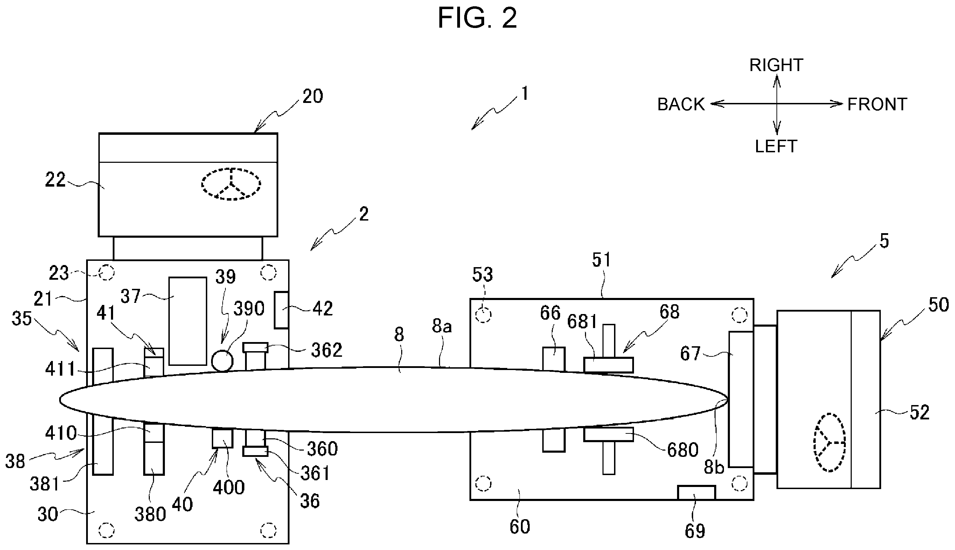

Figure 1 is a side view schematically showing a configuration of the structure body cutting system according to the present embodiment. Figure 2 is a top view schematically showing the configuration of the structure body cutting system according to the present embodiment. In the following description, the three-dimensional directions are defined as the left-right direction, the front-back direction, and the up-down direction. The left-right direction and the front-back direction correspond to two directions that are orthogonal in the horizontal direction, and the up-down direction corresponds to the vertical direction. However, these directions are used for convenience only to describe the configuration of the structure body cutting system.

A structure body cutting system 1 according to the present embodiment includes a cutter system 2 mounted on a first moving body moving on a ground or on a sea, and configured to cut a structure body to be cut, and a feeder system 5 mounted on a second moving body moving on the ground or on the sea independent from the first moving body, and configured to send out the structure body to the cutter system 2. The structure body is placed so as to straddle between the cutter system 2 and the feeder system 5. The feeder system 5 sends out the structure body to the cutter system 2 as the second moving body comes close to the first moving body. The cutter system 2 cuts the structure body into a plurality of cut segments by cutting the structure body sent out from the feeder system 5.

The configuration of the structure body cutting system 1 will be described in detail below. In the following description, a blade 8 of a wind power generation device is exemplified as the structure body to be cut. The blade 8 has a longitudinal shape extending in one direction while being twisted. As shown in Figures 1 and 2, the structure body cutting system 1 includes the cutter system 2 that cuts the blade 8 and the feeder system 5 that sends out the blade 8 to the cutter system 2. In the example shown in Figures 1 and 2, the front-back direction corresponds to a longitudinal direction of the blade 8 and a feeding direction in which the blade 8 is sent out, and the left-right direction corresponds to a lateral direction that intersects with (is orthogonal to in the present embodiment) the feeding direction.

The cutter system 2 includes a cutter base 30 and a cutter unit 35. The cutter system 2 is mounted on a trailer 20 (hereinafter referred to as the "cutting side trailer 20"), which is an example of the first moving body that moves on the ground. The cutting side trailer 20 is provided with a loading platform 21 on which an object to be conveyed such as a container is mounted, and a traction vehicle 22 that pulls the loading platform 21. At each of four corners of the loading platform 21, a first tightening device 23 that removably fixes the object to be conveyed is provided. The first tightening device 23 is, for example, a twist lock.

The cutter base 30 is a plate-shaped base member on which the cutter unit 35 is mounted. The cutter unit 35 is fixed to the cutter base 30 by a fastening means such as a bolt.

The cutter base 30 has the same shape and size as the loading platform 21 of the cutting side trailer 20, but is not limited to this. A first fixed portion 31 to which the first tightening device 23 is fixed is provided on a lower surface side of the cutter base 30 so as to correspond to the first tightening device 23 on a side of the loading platform 21. The first fixed portion 31 is configured with an elongated hole or the like that is suitable for the first tightening device 23 to be inserted. The cutter base 30 is removably fixed to the cutting side trailer 20 via the first tightening device 23 of the loading platform 21.

The cutter unit 35 is provided with various elements for cutting the blade 8. Specifically, the cutter unit 35 includes a first support mechanism 36, a cutter 37, a second support mechanism 38, an alignment member 39, a first width aligning mechanism 40, a second width aligning mechanism 41, and an operation panel 42.

The first support mechanism 36 is provided on a front side of the cutter 37, that is, on a loading side on which the blade 8 is loaded with respect to the cutter 37. The first support mechanism 36 supports the blade 8 that is sent out from the feeder system 5 to the cutter 37. The first support mechanism 36 supports the blade 8 such that a feeding height (a pass line) for feeding the blade 8 is a predetermined reference height Ha. For example, the first support mechanism 36 is configured with a first rotating roller 360 that rotates around a rotation axis extending in the left-right direction, and support legs 361 and 362 that rotatably support the first rotating roller 360.

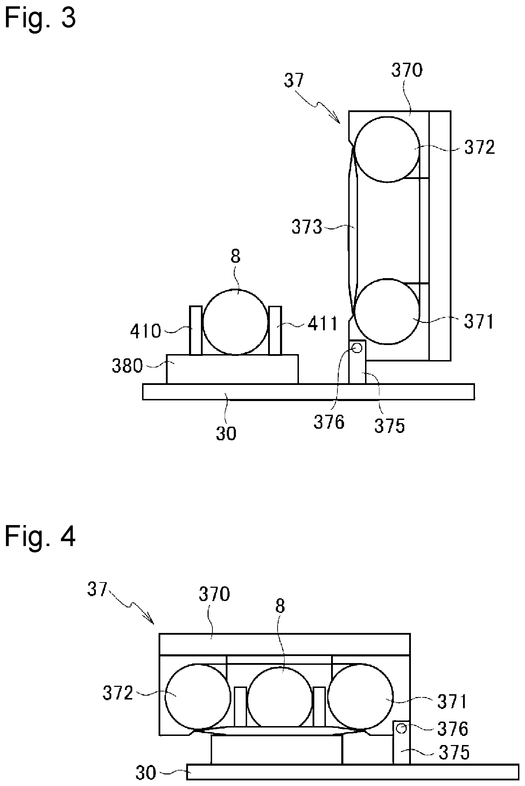

Figures 3 and 4 are explanatory diagrams schematically showing a configuration of the cutter 37. The cutter 37 cuts the blade 8 that is supported by the first support mechanism 36. In the example shown in Figures 3 and 4, the cutter 37 is configured with a horizontal band saw machine. The cutter 37 is mainly configured with a saw blade housing 370 and a hinge mechanism 375.

The saw blade housing 370 includes a driving wheel 371, a driven wheel 372, and a band saw blade 373 tightly stretched between the driving wheel 371 and the driven wheel 372. The driving wheel 371 and the driven wheel 372 are rotatably attached to the saw blade housing 370. Power from a drive mechanism including a motor, a gear, and the like is transmitted to the driving wheel 371 and the driving wheel 371 is rotationally driven as the power is received. The band saw blade 373 travels by a rotational drive of the driving wheel 371.

The hinge mechanism 375 includes a hinge shaft 376 provided parallel to a rotation axis of the driving wheel 371. The saw blade housing 370 is fixed to the cutter base 30 via the hinge mechanism 375 and is configured to be rotatable around the hinge shaft 376. The saw blade housing 370 can be rotated between an upper limit position (see Figure 3) at which a travel line of the band saw blade 373 is substantially in the vertical direction and a lower limit position (see Figure 4) at which the travel line of the band saw blade 373 is substantially in the horizontal direction. The travel line of the band saw blade 373 when the saw blade housing 370 is at the lower limit position is set to be below a height of the blade 8 that is supported by the first support mechanism 36, that is, the reference height Ha.

Referring again to Figures 1 and 2, the second support mechanism 38 is provided at a position opposed to the first support mechanism 36 with the cutter 37 interposed therebetween. In other words, the second support mechanism 38 is provided on a rear side of the cutter 37, that is, on an unloading side on which the blade 8 (the cut segment) cut by the cutter 37 is unloaded. The second support mechanism 38 supports the blade 8 that is cut by the cutter 37.

For example, the second support mechanism 38 includes a pair of support bodies 380 and 381 configured to be movable up and down in the up-down direction. The pair of support bodies 380 and 381 are arranged so as to be separated by a certain distance in the front-back direction. The blade 8 cut by the cutter 37 is supported at two points by the pair of support bodies 380 and 381. Each of the support bodies 380 and 381 includes a drive mechanism such as a hydraulic cylinder, and receives power from the drive mechanism to move up and down independently in the up-down direction. As a result, each of the support bodies 380 and 381 can support the blade 8 at the same height as the reference height Ha at which the first support mechanism 36 supports the blade 8, or at a height different from the reference height Hb.

The alignment member 39 aligns a position of the blade 8 with respect to the cutter 37 as an end surface 8a of the blade 8 extending along the front-back direction is brought into contact with the alignment member 39. For example, the alignment member 39 is configured with a second rotating roller 390 that rotates around a rotating axis extending in the up-down direction, and a pedestal portion (not shown) that rotatably supports the second rotating roller 390. In the example shown in Figure 1, the alignment member 39 is provided between the first support mechanism 36 and the cutter 37.

The first width aligning mechanism 40 is provided at a position opposed to the alignment member 39 in the left-right direction. The first width aligning mechanism 40 includes a first movable member 400 configured to be movable in the left-right direction, and a drive mechanism (not shown) such as a hydraulic cylinder that moves the first movable member 400 in the left-right direction. The first width aligning mechanism 40 fixes the blade 8 between itself and the alignment member 39 by moving the first movable member 400 in the right direction. The first width aligning mechanism 40 releases the fixation of the blade 8 by moving the first movable member 400 in the left direction. The first movable member 400 can move in the left direction up to a predetermined fully open position.

The second width aligning mechanism 41 is mounted on the support body 380 on a front side in the second support mechanism 38. The second width aligning mechanism 41 includes a pair of second movable members 410 and 411 that are provided at positions opposed to each other in the left-right direction, and a drive mechanism (not shown) such as a hydraulic cylinder. The pair of second movable members 410 and 411 are configured to be movable in the left-right direction, and each of the pair of second movable members 410 and 411 moves along the left-right direction by receiving power from the drive mechanism. The second width aligning mechanism 41 fixes the blade 8 between the pair of second movable members 410 and 411 by moving the pair of second movable members 410 and 411 along the left-right direction so as to be close with each other. Further, the second width aligning mechanism 41 releases the fixation of the blade 8 by moving the pair of second movable members 410 and 411 along the left-right direction so as to be away from each other. Each of the pair of second movable members 410 and 411 can move in the left-right direction up to a predetermined fully open position.

The operation panel 42 is a device for controlling the operations of the cutter 37, the second support mechanism 38, the first width aligning mechanism 40, and the second width aligning mechanism 41. The operation panel 42 is operated by an operator who uses the structure body cutting system 1, for example.

The feeder system 5 includes a feeder base 60 and a feeder unit 65. The feeder system 5 is mounted on a trailer 50 (hereinafter referred to as the "feeding side trailer 50"), which is an example of the second moving body that moves on the ground. The feeding side trailer 50 includes a loading platform 51 on which the object to be conveyed such as the container is mounted, and a traction vehicle 52 that pulls the loading platform 51. At each of four corners of the loading platform 51, a second tightening device 53 that removably fixes the object to be conveyed is provided. The second tightening device 53 is, for example, the twist lock.

The feeder base 60 is a plate-shaped base member on which the feeder unit 65 is mounted. The feeder unit 65 is fixed to the cutter base 30 by the fastening means such as the bolt.

The feeder base 60 has the same shape and size as the loading platform 51 of the feeding side trailer 50, but is not limited to this. A second fixed portion 61 to which the second tightening device 53 is fixed is provided on a lower surface side of the feeder base 60 so as to correspond to the second tightening device 53 on a side of the loading platform 51. The second fixed portion 61 is configured with the elongated hole or the like that is suitable for the second tightening device 53 to be inserted. The feeder base 60 is removably fixed to the feeding side trailer 50 via the second tightening device 53 of the loading platform 51.

The feeder unit 65 is provided with various elements for sending out the blade 8 to the cutter system 2. Specifically, the feeder unit 65 includes a third support mechanism 66, an abutment unit 67, a third width aligning mechanism 68, and an operation panel 69.

The third support mechanism 66 supports the blade 8 that is sent out to the cutter system 2. The third support mechanism 66 supports the blade 8 such that the feeding height (the pass line) for feeding the blade 8 is the predetermined reference height Ha.

The abutment unit 67 is a vertical wall-shaped member that stands up in the vertical direction. As the cutter system 2 moves backward, a blade edge 8b of the blade 8 in the front-back direction abuts against the abutment unit 67, which makes it possible to push the blade 8 toward a side of the cutter system 2.

The third width aligning mechanism 68 is provided between the abutment unit 67 and the third support mechanism 66. The third width aligning mechanism 68 includes a pair of third movable members 680 and 681 that are provided at positions opposed to each other in the left-right direction, and a drive mechanism (not shown) such as a hydraulic cylinder. The pair of third movable members 680 and 681 are configured to be movable in the left-right direction, and each of the pair of third movable members 680 and 681 moves along the left-right direction by receiving power from the drive mechanism. The third width aligning mechanism 68 fixes the blade 8 between the pair of third movable members 680 and 681 by moving the pair of third movable members 680 and 681 along the left-right direction so as to be close with each other. Further, the third width aligning mechanism 68 releases the fixation of the blade 8 by moving the pair of third movable members 680 and 681 along the left-right direction so as to be away from each other. Each of the pair of third movable members 680 and 681 can move in the left-right direction up to a predetermined fully open position.

The operation panel 69 is a device for operating the operation of the third width aligning mechanism 68. The operation panel 42 is operated by the operator who uses the structure body cutting system 1, for example.

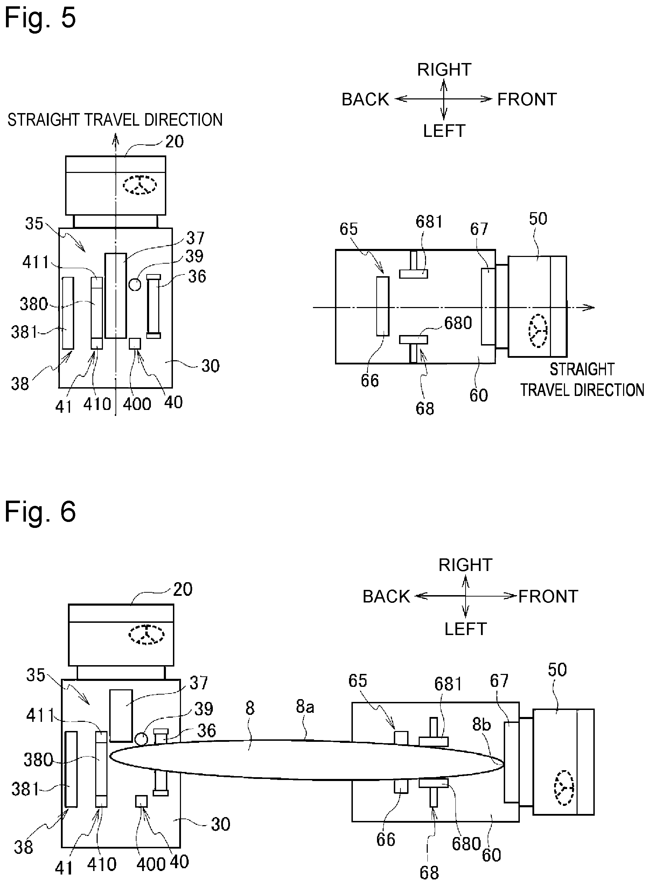

Figures 5 to 10 are diagrams for explaining the structure body cutting method according to the present embodiment. The structure body cutting method according to the present embodiment, that is, a method of cutting the blade 8 by the structure body cutting system 1 will be described below. It should be noted that in Figures 5 to 10, the description of the operation panels 42 and 69 are omitted for convenience of explanation.

First, as shown in Figure 5, the feeding side trailer 50 is positioned with respect to the cutting side trailer 20. With this positioning, each of the trailers 20 and 50 is arranged such that a straight travel direction (a forward travel direction and a backward travel direction) of the cutting side trailer 20 intersects with a straight travel direction of the feeding side trailer 50, and the cutting side trailer 20 is on an extension of a backward travel direction of the feeding side trailer 50. In the example shown in Figure 5, the cutting side trailer 20 is arranged rightward in the left-right direction, and the feeding side trailer 50 is arranged forward in the front-back direction. Then, the two trailers 20 and 50 are lined up on a straight line parallel to the front-back direction such that their straight travel directions are orthogonal to each other.

After the two trailers 20 and 50 are positioned, the operator operates the operation panels 42 and 69 to move the first movable member 400 of the first width aligning mechanism 40, the pair of second movable members 410 and 411 of the second width aligning mechanism 41, and the pair of third movable members 680 and 681 of the third width aligning mechanism 68 to the fully open positions. The operator operates the operation panel 42 to lower the pair of support bodies 380 and 381 of the second support mechanism 38 to the lowest position.

Next, as shown in Figure 6, the operator operates the operation panel 42 to move the saw blade housing 370 to the upper limit position.

The blade 8 to be cut is brought in from above by using an external crane or the like, and placed so as to straddle between the cutter system 2 and the feeder system 5. The blade 8 is supported by each of the first support mechanism 36 of the cutter system 2 and the third support mechanism 66 of the feeder system 5.

At this time, the blade 8 is placed in a state in which the longitudinal direction of the blade 8 coincides with the front-back direction. The blade edge 8b of the blade 8 on the side of the feeder system 5 is in a state of being abutted against the abutment unit 67. Further, the end surface 8a of the blade 8 along the front-back direction is in a state of being in contact with the alignment member 39.

When the blade 8 is placed, the operator operates the operation panel 69 to perform a width aligning operation by the third width aligning mechanism 68. In the width aligning operation, the pair of third movable members 680 and 681 move along the left-right direction so as to be close with each other. The blade 8 is fixed between the pair of third movable members 680 and 681.

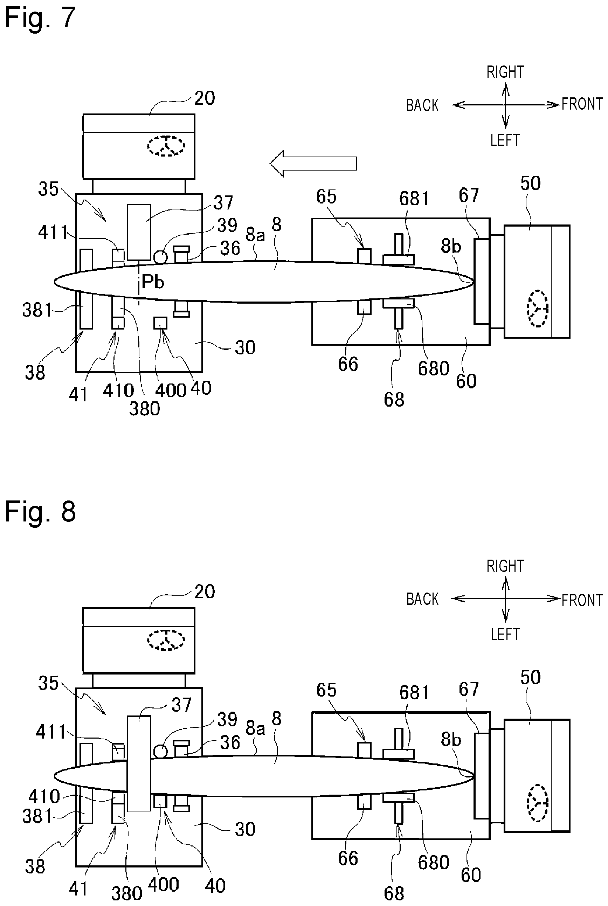

Next, as shown in Figure 7, by moving backward the feeding side trailer 50, the feeder system 5 sends out the blade 8 to the cutter system 2 along the longitudinal direction of the blade 8. The feeding side trailer 50 is moved back by a predetermined movement amount so that a cut position Pb of the blade 8 reaches the cutter 37 of the feeder system 5. The cut position Pb of the blade 8 is determined in consideration of a center of gravity of the cut segment, which is a part cut out from the blade 8, and a length of the cut segment. Specifically, the cut position Pb of the blade 8 is determined such that the center of gravity of the cut segment is positioned between the pair of support bodies 380 and 381 of the second support mechanism 38 and the length of the cut segment is a length transportable by land.

When the feeder system 5 sends out the blades 8, the feeding side trailer 50 is moved backward while the backward direction of the feeding side trailer 50 is being adjusted so as to maintain the state in which the end surface 8a of the blade 8 is in contact with the alignment member 39. By maintaining the state in which the end surface 8a of the blade 8 is in contact with the alignment member 39, the blade 8 can be sent out so as to stay within a cutting region of the cutter 37. Here, the cutting region of the cutter 37 is a region in which the band saw blade 373 cuts the blade 8, and corresponds to a region between the driving wheel 371 and the driven wheel 372 in the band saw blade 373.

As shown in Figure 8, the operator operates the operation panel 42 to perform a width aligning mechanism on the side of the cutter system 2, that is, a width aligning operation by the first width aligning mechanism 40 and the second width aligning mechanism 41. In the width aligning operation, the first movable member 400 moves in the right direction, and the pair of second movable members 410 and 411 move along the left and right direction so as to be close with each other. Due to the width aligning operation, the blade 8 is fixed between the alignment member 39 and the first movable member 400, and fixed between the pair of third movable members 680 and 681.

The operator operates the operation panel 42 to move up the pair of support bodies 380 and 381 of the second support mechanism 38 until they abut against the blade 8.

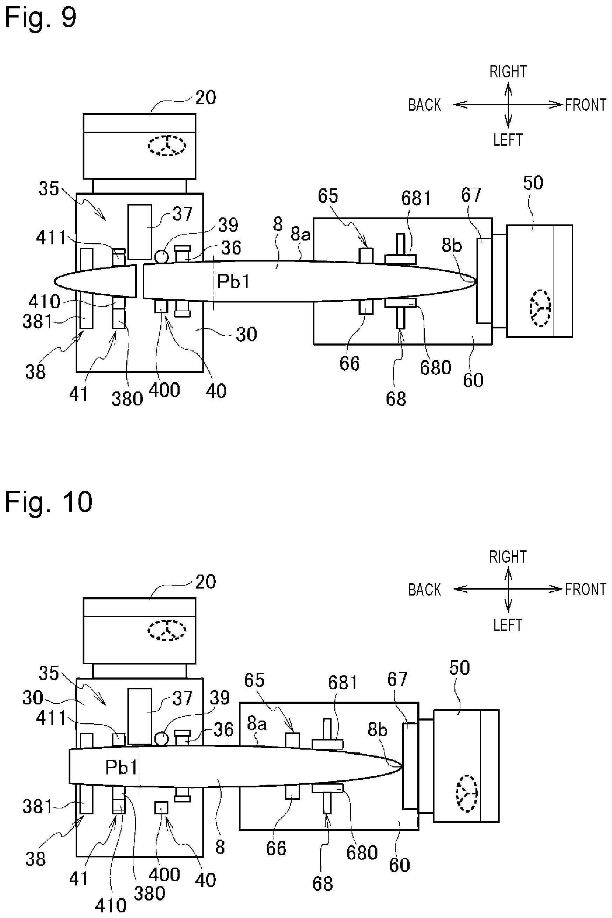

Further, the operator operates the operation panel 42 to rotate the saw blade housing 370 up to the lower limit position while causing the band saw blade 373 of the cutter 37 to travel, and then returns the saw blade housing 370 to the upper limit position. As a result, as shown in Figure 9, the blade 8 is cut (divided) by the cutter 37. The cut segment, which is a part cut out by the cutter 37 from the blade 8, is supported by the pair of support bodies 380 and 381 of the second support mechanism 38.

As shown in Figure 10, the operator operates the operation panels 42 and 69 to move the first width aligning mechanism 40 and the second width aligning mechanism 41 to the fully open positions. The cut segment is removed from the second support mechanism 38 by the crane or the like. Then, by repeating the above-described operation for a new cut position Pb1 on the remaining blade 8, the blade 8 is divided into the plurality of the cut segments. It should be noted that since there are a plurality of the blades 8 of the wind power generation device, it is possible to store the operations of the operator and automatically reuse them. Further, if the shape of the blade is set in advance, it is possible to automate the operation including the operation of the feeding side trailer 50.

In this manner, the structure body cutting system 1 of the present embodiment includes the cutter system 2 mounted on the cutting side trailer 20, and the feeder system 5 mounted on the feeding side trailer 50. The blade 8 is placed so as to straddle between the cutter system 2 and the feeder system 5. The feeder system 5 sends out the blade 8 to the cutter system 2 as the feeding side trailer 50 comes close to the cutting side trailer 20. The cutter system 2 cuts the blade 8 into the plurality of the cut segments by cutting the blade 8 sent out from the feeder system 5.

According to this configuration, since the cutter system 2 and the feeder system 5 are respectively mounted on the cutting side trailer 20 and the feeding side trailer 50, it is possible to move the cutter system 2 and the feeder system 5 to arbitrary locations. Since the structure body cutting system 1 can be constructed at a location at which the blade 8, which is a huge structure body, is present, there is no need to spend a huge amount of money to transport the huge blade 8. Further, since the cutter system 2 and the feeder system 5 can be separated by the cutting side trailer 20 and the feeding side trailer 50 by a required distance, it is possible to support both sides of the blade 8 in accordance with a length of the huge blade 8. In addition, since the feeder system 5 can send out the blade 8 to the cutter system 2 as the feeding side trailer 50 moves, the cutter system 2 can cut the huge structure body. As a result, it is possible to cut the huge blade 8 into small pieces on the spot.

In this manner, according to the structure body cutting system 1 according to the present embodiment, a system suitable for cutting the huge blade 8 can be provided.

In the present embodiment, the cutter system 2 includes a first support mechanism 36 that supports the blade 8 sent out along the longitudinal direction, the cutter 37 that cuts the blade 8 supported by the first support mechanism 36, the second support mechanism 38 that is provided to be movable up and down in the up-down direction at the position opposed to the first support mechanism 36 with the cutter 37 interposed therebetween, and is configured to support the cut segment (a part cut out from the blade 8) that is cut by the cutter 37, and the alignment member 39 that aligns the position of the blade 8 with respect to the cutter 37 as the end surface 8a of the blade 8 is brought into contact with the alignment member 39.

According to this configuration, the first support mechanism 36 and the second support mechanism 38 are arranged with the cutter 37 interposed therebetween. Therefore, the first support mechanism 36 can support the blade 8 on the loading side with respect to the cutter 37 and the second support mechanism 38 can support the blade 8 on the unloading side with respect to the cutter 37. As a result, the blade 8 can be appropriately cut by the cutter 37.

Further, in an installation-type cutter such as a typical horizontal band saw, the pass line (the reference height Ha), which is the feeding height at which a workpiece is fed, has a constant height from the loading side to the unloading side. However, in the feeder system 5 according to the present embodiment, since the cutter system 2 and the feeder system 5 are independent and arranged at the arbitrary locations, the cutter system 2 and the feeder system 5 are not always arranged in a same height environment due to an inclination of the land or an undulation of the land. Further, since the blade 8, which is the object to be cut, has a twisted shape along the longitudinal direction, the blade 8 is also not in a shape along the pass line.

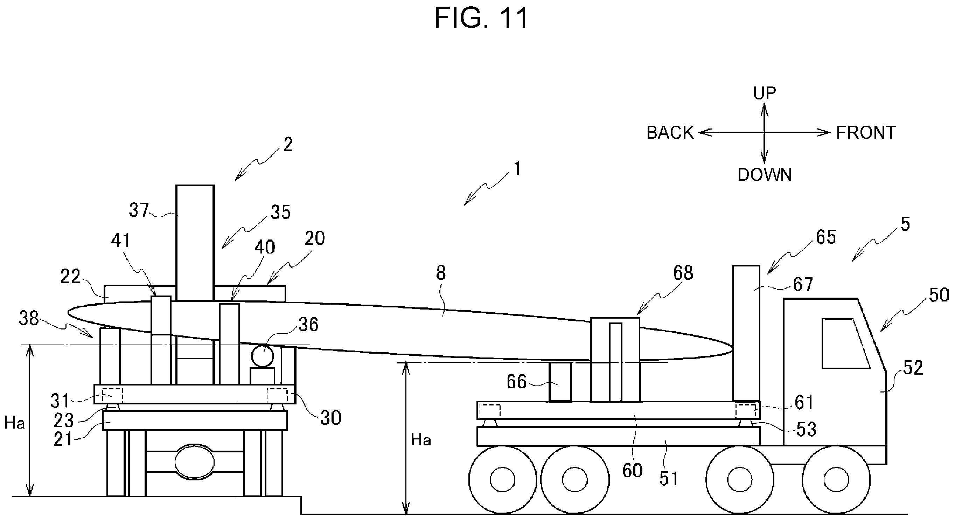

Figure 11 is a diagram showing a relationship between the cutter system and the feeder system. According to the cutter system 2 of the present embodiment, the second support mechanism 38 provided on the unloading side with respect to the cutter 37 is configured to be movable up and down in the up-down direction. Even if the pass line of the cutter system 2 and the pass line of the feeder system 5 are different from each other, or the blade 8 having the twisted shape is to be fed, it is possible to cause the second support mechanism 38 to appropriately follow the blade 8. By having the second support mechanism 38, it is possible to ensure effectiveness of the cutting for the blade 8 regardless of the difference in the pass line and the shape of the blade 8.

Further, the cutter system 2 according to the present embodiment includes the alignment member 39 that aligns the position of the blade 8 with respect to the cutter 37. As a result, by moving back the feeding side trailer 50 so that the state in which the end surface 8a of the blade 8 is in contact with the alignment member 39 is maintained, it is possible to hold the blade 8 sent out to the cutter 37 in the cutting region of the cutter 37. As a result, it possible to easily perform the positioning of the blade 8 with respect to the cutter 37.

In the embodiment described above, the feeding side trailer 50 is moved back so that the state in which the end surface 8a of the blade 8 is in contact with the alignment member 39 is maintained in order for the blade 8 sent out to the cutter 37 to stay within the cutting region of the cutter 37. However, the positioning of the blade 8 with respect to the cutter 37 is not limited to this method.

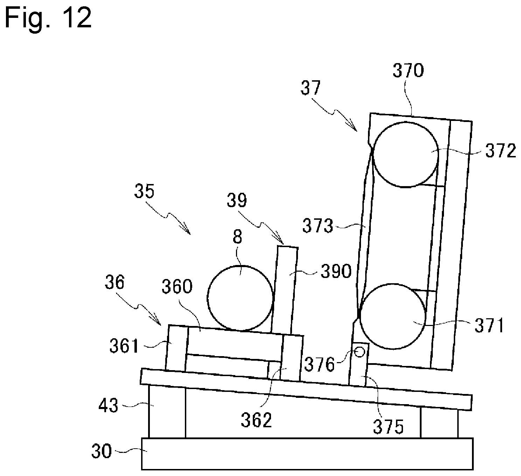

Figure 12 is an explanatory diagram showing a modified example of the cutter system. The cutter system 2 may include a tilting mechanism 43 that tilts the cutter unit, and the tilting mechanism 43 may tilt the cutter unit 35 such that the first support mechanism 36 is inclined downward toward the alignment member 39. As a result, the state in which the blade 8 is in contact with the alignment member 39 can be maintained by a self-weight of the blade 8. It should be noted that the tilting mechanism 43 may be configured to tilt only the first support mechanism 36, other than to tilt the entire cutter unit 35.

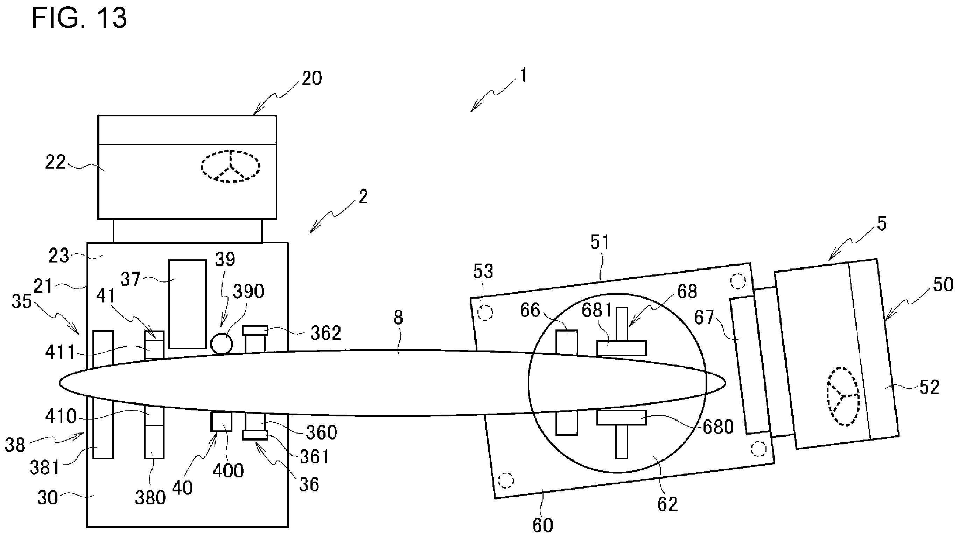

Figure 13 is an explanatory diagram showing a modified example of the cutter system. Further, the feeder system 5 may include a rotation mechanism 62 on the feeder base 60 so as to rotate the feeder unit 65 around a rotation axis along the up-down direction. This rotation mechanism 62 allows the longitudinal direction of the blade 8 to be offset with respect to the backward travel direction of the feeding side trailer 50. As a result, by shifting the longitudinal direction of the blade 8 with respect to the backward travel direction of the feeding side trailer 50, it is possible to maintain the state in which the blade 8 is in contact with the alignment member 39.

Further, in the present embodiment, the cutter system 2 further includes the first width aligning mechanism 40 and the second width aligning mechanism 41. Here, the first width aligning mechanism 40 fixes the blade 8 between the alignment member 39 and the first movable member 400 as the first movable member 400, which is provided at the position opposed to the alignment member 39 in the lateral direction that intersects with the feeding direction, moves along the lateral direction. The second width aligning mechanism 41 fixes the blade 8 between the pair of second movable members 410 and 411 as the pair of second movable members 410 and 411, which are provided at the positions opposed to each other in the lateral direction, move along the lateral direction so as to be close with each other.

The blade 8 has the twisted shape, and simply supporting a lower side of the blade 8 may not stabilize the blade 8 when being cut by the cutter 37. In this regard, according to the cutter system 2, the blade 8 can be fixed from the left-right direction so that the cutting by the cutter 37 can be stably performed.

In the cutter system 2 according to the present embodiment, the cutter base 30, which is a base member on which the elements constituting the cutter system 2 are mounted, is configured to be mountable to and removable from the cutting side trailer 20. Then, the cutter base 30 includes the first fixed portion 31 to which the first tightening device 23 installed on the loading platform 21 is fixed.

According to this configuration, it is possible to handle the cutter system 2 separately from the cutting side trailer 20. Further, since it is possible to easily mount the cutter system 2 on a general-purpose trailer provided with the first tightening device 23, the cutter system 2 can be easily realized. It should be noted that such an effect is obtained not only in the cutter system 2 but also in the feeder system 5.

In the cutter system 2 according to the present embodiment, the cutter 37 is a band saw machine in which the saw blade housing 370 including the band saw blade 373 is configured to be rotatable in the up-down direction around the hinge shaft 376 provided parallel to the rotation axis of the driving wheel 371.

According to this configuration, interference between the blade 8 and the saw blade housing 370 can be suppressed by rotating the saw blade housing 370 to the upper limit position when the blade 8 is placed by the crane. As a result, the blade 8 can be easily placed only by up-down movement of the crane.

The feeder system 5 according to the present embodiment includes the third support mechanism 66 configured to support the blade 8, the abutment unit 67 against which the blade edge 8b of the blade 8 in the feeding direction abuts, and the third width aligning mechanism 68 configured to fix the blade 8 between the pair of third movable members 680 and 681 as the pair of third movable members 680 and 681 provided at the positions opposed to each other move in the lateral direction so as to be close with each other in the lateral direction.

According to this configuration, the blade 8 placed so as to straddle between the cutter system 2 and the feeder system 5 can be appropriately sent out to the cutter system 2. As a result, the cutter system 2 can cut the blade 8 into the plurality of the cut segments.

Further, the structure body cutting method described in the present embodiment has an idea common to the cutting operation of the blade 8 by the structure body cutting system 1 described above, and has the same effect as the structure body cutting system 1.

It should be noted in the embodiment described above, the cutter 37 configured with the band saw machine is exemplified. However, in addition to the band sawing machine, the cutter 37 may also be a saw cutter such as a hacksaw machine that performs cutting with a hacksaw blade. Furthermore, the cutter 37 may be a laser cutter that performs laser cutting. For example, in the hacksaw machine, a saw blade housing including a linear hacksaw blade that reciprocates along the longitudinal direction is configured to be rotational in the up-down direction around a hinge shaft provided parallel to the direction orthogonal to the longitudinal direction of the hacksaw blade.

Further, in the embodiment described above, the cutter system 2 and the feeder system 5 are mounted on the trailers, but they may be mounted on vehicles that move on the ground other than the trailers. Further, the cutter system 2 and the feeder system 5 may be mounted on ships moving on the sea. The cutter system 2 and the feeder system 5 may be ships.

Further, in the embodiment described above, the blade 8 is shown as the structure body to be cut by the structure body cutting system 1. However, in addition to the blades 8, the structure body may also be a support column that supports a rotary wing consisting of a plurality of the blades in the wind power generation device, or a huge structure body other than that.

Although the present embodiment has been described in a manner described above, it should not be understood that the statements and drawings forming part of the present embodiment limit the present invention. From this disclosure, various alternative embodiments, examples, and operational techniques falling within the scope of the claims can be encompassed.

## Claims

1. A structure body cutting system (1) comprising:
a cutter system (2) mounted on a first moving body (20) moving on a ground or on a sea, and configured to cut a structure body (8) to be cut; and
a feeder system (5) mounted on a second moving body (50) moving on the ground or on the sea independently from the first moving body (20), and configured to send out the structure body (8) to the cutter system (2), wherein
the structure body (8) is placed so as to straddle between the cutter system (2) and the feeder system (5),
the feeder system (5) sends out the structure body (8) to the cutter system (2) as the second moving body (50) comes close to the first moving body (20), and
the cutter system (2) cuts the structure body (8) into a plurality of cut segments by cutting the structure body (8) sent out from the feeder system (5),
the cutter system (2) including
a first support mechanism configured to support the structure body (8) sent out from the feeder system (5);
a cutter configured to cut the structure body (8) supported by the first support mechanism;
the structure body cutting system being **characterized by**
a second support mechanism provided to be movable up and down in an up-down direction at a position opposed to the first support mechanism with the cutter interposed therebetween, and
configured to support the cut segment cut by the cutter; and
an alignment member configured to align a position of the structure body (8) with respect to the cutter as an end surface of the structure body (8) along a feeding direction in which the structure body (8) is sent out is brought into contact with the alignment member.

2. The structure body cutting system (1) according to claim 1, wherein the cutter system (2) further includes:
a first width aligning mechanism configured to fix the structure body (8) between the alignment member and a first movable member as the first movable member provided at a position opposed to the alignment member in a lateral direction intersecting with the feeding direction moves along the lateral direction; and
a second width aligning mechanism configure to fix the structure body (8) between a pair of second movable members provided at positions opposed to each other in the lateral direction as the pair of second movable members move along the lateral direction so as to be close to each other.

3. The structure body cutting system (1) according to claim 1 or 2, wherein
the cutter system (2) further includes a cutter base that is a base member on which elements constituting the cutter system (2) are mounted, and
the cutter base is configured to be mountable to and removable from the first moving body (20).

4. The structure body cutting system (1) according to claim 3, wherein
the first moving body (20) is a trailer in which a traction vehicle pulls a loading platform on which an object to be conveyed is mounted, and the loading platform is provided with a first tightening device for removably fixing the object to be conveyed, and
the cutter base includes a first fixed portion to which the first tightening device is fixed.

5. The structure body cutting system (1) according to any one of claims 1 to 4, wherein the feeder system (5) includes:
a third support mechanism configured to support the structure body (8);
a vertical wall portion standing up in a vertical direction and against which an end of the structure body (8), in a feeding direction in which the structure body (8) is sent out, abuts; and
a third width aligning mechanism configured to fix the structure body (8) between a pair of third movable members provided at positions opposed to each other in the lateral direction intersecting with the feeding direction as the pair of third movable members move along the lateral direction so as to be close to each other.

6. The structure body cutting system (1) according to claim 1 or 5, wherein
the feeder system (5) further includes a feeder base that is a base member on which elements constituting the feeder system (5) are mounted, and
the feeder base is configured to be mountable to and removable from the second moving body (50).

7. The structure body cutting system (1) according to claim 6, wherein
the second moving body (50) is a trailer in which a traction vehicle pulls a loading platform on which an object to be conveyed is mounted, and the loading platform is provided with a second tightening device for removably fixing the object to be conveyed, and
the feeder base includes a second fixed portion to which the second tightening device is fixed.

8. The structure body cutting system (1) according to claim 1 or 2, wherein the cutter is a band saw machine in which a saw blade housing including a band saw blade tightly stretched between a driving wheel and a driven wheel is configured to be rotatable in an up-down direction around a hinge shaft provided parallel to a rotation axis of the driving wheel, or a hacksaw machine in which a saw blade housing including a linear hacksaw blade that reciprocates along a longitudinal direction is configured to be rotatable in the up-down direction around a hinge shaft provided parallel to a direction orthogonal to the longitudinal direction of the hacksaw blade.

9. A structure body cutting method comprising:
positioning a feeder system (5) mounted on a second moving body (50) moving on a ground or on a sea independently from a first moving body (20) moving on the ground or on the sea, and configured to send out a structure body (8) to a cutter system (2) mounted on the first moving body (20), and configured to cut the structure body (8) to be cut;
wherein the cutter system (2) includes:
a first support mechanism configured to support the structure body (8) sent out from the feeder system (5);
a cutter configured to cut the structure body (8) supported by the first support mechanism;
a second support mechanism provided to be movable up and down in an up-down direction at a position opposed to the first support mechanism with the cutter interposed therebetween, and configured to support the cut segment cut by the cutter; and
an alignment member configured to align a position of the structure body (8) with respect to the cutter as an end surface of the structure body (8) along a feeding direction in which the structure body (8) is sent out is brought into contact with the alignment member,
placing the structure body (8) so as to straddle between the cutter system (2) and the feeder system (5);
sending out, by the feeder system (5), the structure body (8) to the cutter system (2) as the second moving body (50) moves toward the first moving body (20); and
cutting, by the cutter system (2), the structure body (8) into a plurality of cut segments by cutting the structure body (8) sent out from the feeder system (5).

## Patentansprüche

1. Ein Strukturkörperschneidesystem (1) aufweisend:
ein Schneidsystem (2), das an einem ersten beweglichen Körper (20) angebracht ist, der sich auf dem Boden oder auf dem Meer bewegt, und das so konfiguriert ist, dass es einen zu schneidenden Strukturkörper (8) schneidet; und
ein Zuführsystem (5), das an einem zweiten beweglichen Körper (50) angebracht ist, der sich unabhängig von dem ersten beweglichen Körper (20) auf dem Boden oder auf dem Meer bewegt, und das so konfiguriert ist, dass es den Strukturkörper (8) zu dem Schneidsystem (2) aussendet, wobei
der Strukturkörper (8) so angeordnet ist, dass er sich zwischen dem Schneidsystem (2) und dem Zuführsystem (5) erstreckt,
wobei das Zuführsystem (5) den Strukturkörper (8) an das Schneidsystem (2) ausgibt, wenn sich der zweite bewegliche Körper (50) dem ersten beweglichen Körper (20) nähert, und
das Schneidsystem (2) den Strukturkörper (8) in eine Vielzahl von geschnittenen Segmenten schneidet, indem es den vom Zuführsystem (5) ausgegebenen Strukturkörper (8) schneidet,
wobei das Schneidsystem (2) aufweist
einen ersten Support-Mechanismus, der so konfiguriert ist, dass er den von dem Zuführsystem (5) ausgesendeten Strukturkörper (8) unterstützt;
ein Schneidwerkzeug, das so konfiguriert ist, dass es den vom ersten Support-Mechanismus unterstützten Strukturkörper (8) schneidet;
wobei das Strukturkörperschneidesystem **gekennzeichnet ist durch**
einen zweiten Support-Mechanismus, der so vorgesehen ist, dass er in einer Auf-Ab-Richtung an einer dem ersten Support-Mechanismus gegenüberliegenden Position mit dem dazwischen angeordneten Schneidwerkzeug auf und ab bewegbar ist, und der so konfiguriert ist, dass er das vom Schneidwerkzeug geschnittene Schnittsegment unterstützt; und
ein Ausrichtungselement, das so konfiguriert ist, dass es eine Position des Strukturkörpers (8) in Bezug auf den Schneidwerkzeug ausrichtet, indem eine Endfläche des Strukturkörpers (8) entlang einer Zuführungsrichtung, in der der Strukturkörper (8) ausgegeben wird, mit dem Ausrichtungselement in Kontakt gebracht wird.

2. Das Strukturkörperschneidesystem (1) gemäß Anspruch 1, wobei das Schneidwerkzeugsystem (2) ferner aufweist:
einen ersten Breitenausrichtmechanismus, der so konfiguriert ist, dass er den Strukturkörper (8) zwischen dem Ausrichtelement und einem ersten beweglichen Element fixiert, wenn sich das erste bewegliche Element, das an einer Position gegenüber dem Ausrichtelement in einer Querrichtung senkrecht zur Zuführrichtung vorgesehen ist, entlang der Querrichtung bewegt; und
einen zweiten Breitenausrichtmechanismus, der so konfiguriert ist, dass er den Strukturkörper (8) zwischen einem Paar zweiter beweglicher Elemente fixiert, die an Positionen vorgesehen sind, die einander in der seitlichen Richtung gegenüberliegen, wenn sich das Paar zweiter beweglicher Elemente entlang der seitlichen Richtung so bewegt, dass sie nahe beieinander liegen.

3. Das Strukturkörperschneidesystem (1) nach Anspruch 1 oder 2, wobei
das Schneidsystem (2) ferner eine Schneidbasis aufweist, die ein Basiselement ist, auf dem Elemente, die das Schneidsystem (2) bilden, montiert sind, und
die Schneidbasis so konfiguriert ist, dass sie an dem ersten beweglichen Körper (20) montierbar und von diesem abnehmbar ist.

4. Das Strukturkörperschneidesystem (1) nach Anspruch 3, wobei
der erste bewegliche Körper (20) ein Anhänger ist, bei dem ein Zugfahrzeug eine Ladeplattform zieht, auf der ein zu transportierendes Objekt montiert ist, und die Ladeplattform mit einer ersten Spannvorrichtung zum lösbaren Befestigen des zu transportierenden Objekts versehen ist, und
die Schneidbasis einen ersten festen Abschnitt aufweist, an dem die erste Spannvorrichtung befestigt ist.

5. Das Strukturkörperschneidesystem (1) gemäß einem der Ansprüche 1 bis 4, wobei das Zuführsystem (5) aufweist:
einen dritten Stützmechanismus, der so konfiguriert ist, dass er den Strukturkörper (8) stützt;
einen vertikalen Wandabschnitt, der in einer vertikalen Richtung aufrecht steht und an dem ein Ende des Strukturkörpers (8) in einer Zuführrichtung, in der der Strukturkörper (8) herausgeschickt wird, anliegt; und
einen dritten Breitenausrichtmechanismus, der so konfiguriert ist, dass er den Strukturkörper (8) zwischen einem Paar dritter beweglicher Elemente fixiert, die an Positionen gegenüberliegend in der seitlichen Richtung, die die Zuführrichtung schneidet, vorgesehen sind, wenn sich das Paar dritter beweglicher Elemente entlang der seitlichen Richtung so bewegt, dass sie nahe beieinander sind.

6. Das Strukturkörperschneidesystem (1) nach Anspruch 1 oder 5, wobei
das Zuführsystem (5) ferner eine Zuführbasis aufweist, die ein Basiselement ist, auf dem Elemente, die das Zuführsystem (5) bilden, montiert sind, und
die Zuführbasis so konfiguriert ist, dass sie an dem zweiten beweglichen Körper (50) montierbar und von diesem abnehmbar ist.

7. Das Strukturkörperschneidesystem (1) nach Anspruch 6, wobei
der zweite bewegliche Körper (50) ein Anhänger ist, bei dem ein Zugfahrzeug eine Ladeplattform zieht, auf der eine zu transportierende Aufgabe montiert ist, und die Ladeplattform mit einer zweiten Spannvorrichtung zum lösbaren Befestigen der zu transportierenden Aufgabe versehen ist, und
die Zuführungsbasis einen zweiten festen Abschnitt aufweist, an dem die zweite Spannvorrichtung befestigt ist.

8. Das Strukturkörperschneidesystem (1) gemäß Anspruch 1 oder 2, wobei der Schneider
eine Bandsägemaschine ist, bei der ein Sägeblattgehäuse, das ein zwischen einem Antriebsrad und einem angetriebenen Rad straff gespanntes Bandsägeblatt aufweist, so konfiguriert ist, dass es um eine parallel zu einer Drehachse des Antriebsrades vorgesehene Scharnierwelle in einer Auf-Ab-Richtung drehbar ist, oder
eine Bügelsägemaschine, bei der ein Sägeblattgehäuse, das ein lineares Bügelsägeblatt aufweist, das entlang einer Längsrichtung hin- und hergeht, so konfiguriert ist, dass es in der Auf-Ab-Richtung um eine Scharnierwelle drehbar ist, die parallel zu einer Richtung orthogonal zur Längsrichtung des Bügelsägeblatts vorgesehen ist.

9. Ein Verfahren zum Schneiden eines Strukturkörpers, aufweisend:
Positionieren eines Zuführsystems (5), das an einem zweiten Bewegungskörper (50) angebracht ist, der sich unabhängig von einem ersten Bewegungskörper (20), der sich auf dem Boden oder auf dem Meer bewegt, auf dem Boden oder auf dem Meer bewegt, und das so konfiguriert ist, dass es einen Strukturkörper (8) an ein Schneidsystem (2) sendet, das an dem ersten Bewegungskörper (20) angebracht ist, und das so konfiguriert ist, dass es den zu schneidenden Strukturkörper (8) schneidet;
wobei das Schneidsystem (2) aufweist:
einen ersten Stützmechanismus, der so konfiguriert ist, dass er den von dem Zuführsystem (5) ausgegebenen Strukturkörper (8) stützt;
einen Schneidwerk, das so konfiguriert ist, dass es den vom ersten Stützmechanismus gestützten Strukturkörper (8) schneidet;
einen zweiten Stützmechanismus, der so vorgesehen ist, dass er in einer Auf-Ab-Richtung an einer dem ersten Stützmechanismus gegenüberliegenden Position mit dem dazwischen angeordneten Schneidwerk auf und ab bewegbar ist, und der so konfiguriert ist, dass er das vom Schneidwerk geschnittene Schnittsegment stützt; und
ein Ausrichtungselement, das so konfiguriert ist, dass es eine Position des Strukturkörpers (8) in Bezug auf den Schneider ausrichtet, wenn eine Endfläche des Strukturkörpers (8) entlang einer Zuführrichtung, in der der Strukturkörper (8) ausgegeben wird, mit dem Ausrichtungselement in Kontakt gebracht wird,
Platzieren des Strukturkörpers (8) so, dass er zwischen dem Schneidersystem (2) und dem Zuführsystem (5) aufliegt;
Ausgeben des Strukturkörpers (8) durch das Zuführsystem (5) an das Schneidsystem (2), wenn sich der zweite bewegliche Körper (50) in Richtung des ersten beweglichen Körpers (20) bewegt; und
Schneiden des Strukturkörpers (8) in eine Vielzahl von geschnittenen Segmenten durch Schneiden des von dem Zuführsystem (5) ausgegebenen Strukturkörpers (8) durch das Schneidsystem (2).

## Revendications

1. Système de découpe d'un corps de structure (1), comprenant :
un système de dispositif de découpe (2) monté sur un premier corps mobile (20) se déplaçant sur terre ou en mer, et configuré pour découper un corps de structure (8) à découper ; et
un système de dispositif d'alimentation (5) monté sur un deuxième corps mobile (50) se déplaçant sur terre ou en mer indépendamment du premier corps mobile (20), et configuré pour envoyer le corps de structure (8) au système de dispositif de découpe (2), dans lequel
le corps de structure (8) est placé de manière à chevaucher le système de dispositif de découpe (2) et le système de dispositif d'alimentation (5),
le système de dispositif d'alimentation (5) envoie le corps de structure (8) au système de dispositif de découpe (2) alors que le deuxième corps mobile (50) se rapproche du premier corps mobile (20), et
le système de dispositif de découpe (2) découpe le corps de structure (8) en une pluralité de segments découpés en découpant le corps de structure (8) envoyé par le système de dispositif d'alimentation (5),
le système de dispositif de découpe (2) incluant un premier mécanisme de support configuré pour supporter le corps de structure (8) envoyé par le système de dispositif d'alimentation (5) ;
un dispositif de découpe configuré pour découper le corps de structure (8) supporté par le premier mécanisme de support ;
le système de découpe d'un corps de structure étant **caractérisé par**
un deuxième mécanisme de support pourvu pour être mobile vers le haut et vers le bas dans une direction haut-bas à une position opposée au premier mécanisme de support avec le dispositif de découpe interposé entre eux, et configuré pour supporter le segment découpé par le dispositif de découpe ; et
un élément d'alignement configuré pour aligner une position du corps de structure (8) par rapport au dispositif de découpe alors qu'une surface d'extrémité du corps de structure (8), le long d'une direction d'alimentation dans laquelle le corps de structure (8) est envoyé, est mise en contact avec l'élément d'alignement.

2. Système de découpe d'un corps de structure (1) selon la revendication 1, dans lequel le système de dispositif de découpe (2) inclut en outre :
un premier mécanisme d'alignement en largeur configuré pour fixer le corps de structure (8) entre l'élément d'alignement et un premier élément mobile alors que le premier élément mobile pourvu à une position opposée à l'élément d'alignement dans une direction latérale intersectant la direction d'alimentation se déplace selon la direction latérale ; et
un deuxième mécanisme d'alignement en largeur configuré pour fixer le corps de structure (8) entre une paire de deuxièmes éléments mobiles pourvus à des positions opposées entre elles dans la direction latérale alors que la paire de deuxièmes éléments mobiles se déplace selon la direction latérale de manière à ce que lesdits éléments soient proches l'un de l'autre.

3. Système de découpe d'un corps de structure (1) selon la revendication 1 ou 2, dans lequel
le système de dispositif de découpe (2) inclut en outre une base de dispositif de découpe qui est un élément de base sur lequel sont montés les éléments constituant le système de dispositif de découpe (2), et
la base de dispositif de découpe est configurée pour pouvoir être montée sur le premier corps mobile (20) et retirée de celui-ci.

4. Système de découpe d'un corps de structure (1) selon la revendication 3, dans lequel
le premier corps mobile (20) est une remorque dans laquelle un véhicule de traction tire une plate-forme de chargement sur laquelle est monté un objet à transporter, et la plate-forme de chargement est pourvue d'un premier dispositif de serrage pour fixer l'objet à transporter de manière amovible, et
la base de dispositif de découpe inclut une première portion fixe sur laquelle est fixé le premier dispositif de serrage.

5. Système de découpe d'un corps de structure (1) selon l'une quelconque des revendications 1 à 4, dans lequel le système de dispositif d'alimentation (5) inclut :
un troisième mécanisme de support configuré pour supporter le corps de structure (8) ;
une portion de paroi verticale dressée en direction verticale et contre laquelle vient à butée une extrémité du corps de structure (8), dans une direction d'alimentation dans laquelle le corps de structure (8) est envoyé ; et
un troisième mécanisme d'alignement en largeur configuré pour fixer le corps de structure (8) entre une paire de troisièmes éléments mobiles pourvus à des positions opposées entre elles dans la direction latérale intersectant la direction d'alimentation, alors que la paire de troisièmes éléments mobiles se déplace selon la direction latérale de manière à ce que lesdits éléments soient proches l'un de l'autre.

6. Système de découpe d'un corps de structure (1) selon la revendication 1 ou 5, dans lequel
le système de dispositif d'alimentation (5) inclut en outre une base de dispositif d'alimentation qui est un élément de base sur lequel sont montés les éléments constituant le système de dispositif d'alimentation (5), et
la base de dispositif d'alimentation est configurée pour pouvoir être montée sur le deuxième corps mobile (50) et retirée de celui-ci.

7. Système de découpe d'un corps de structure (1) selon la revendication 6, dans lequel
le deuxième corps mobile (50) est une remorque dans laquelle un véhicule de traction tire une plate-forme de chargement sur laquelle est monté un objet à transporter, et la plate-forme de chargement est pourvue d'un deuxième dispositif de serrage pour fixer l'objet à transporter de manière amovible, et
la base de dispositif d'alimentation inclut une deuxième portion fixe sur laquelle est fixé le deuxième dispositif de serrage.

8. Système de découpe d'un corps de structure (1) selon la revendication 1 ou 2, dans lequel le dispositif de découpe est
une machine de scie à ruban dans laquelle un boîtier de ruban de scie incluant une lame de scie à ruban fortement tendue entre une roue d'entraînement et une roue entraînée est configuré pour pouvoir tourner dans une direction haut-bas autour d'un axe de charnière pourvu parallèlement à un axe de rotation de la roue d'entraînement, ou
une machine à scie à métaux dans laquelle un boîtier de ruban de scie incluant une lame de scie à métaux linéaire qui effectue un mouvement de va-et-vient selon une direction longitudinale est configuré pour pouvoir tourner dans la direction haut-bas autour d'un axe de charnière pourvu parallèlement à une direction orthogonale à la direction longitudinale de la lame de scie à métaux.

9. Procédé de découpe d'un corps de structure, comprenant :
le positionnement d'un système de dispositif d'alimentation (5) monté sur un deuxième corps mobile (50) se déplaçant sur terre ou en mer indépendamment d'un premier corps mobile (20) se déplaçant sur terre ou en mer, et configuré pour envoyer un corps de structure (8) à un système de dispositif de découpe (2) monté sur le premier corps mobile (20), et configuré pour découper le corps de structure (8) à découper ;
dans lequel le système de dispositif de découpe (2) inclut :
un premier mécanisme de support configuré pour supporter le corps de structure (8) envoyé par le système de dispositif d'alimentation (5) ;
un dispositif de découpe configuré pour découper le corps de structure (8) supporté par le premier mécanisme de support ;
un deuxième mécanisme de support pourvu pour être mobile vers le haut et vers le bas dans une direction haut-bas à une position opposée au premier mécanisme de support avec le dispositif de découpe interposé entre eux, et configuré pour supporter le segment découpé par le dispositif de découpe ; et
un élément d'alignement configuré pour aligner une position du corps de structure (8) par rapport au dispositif de découpe alors qu'une surface d'extrémité du corps de structure (8), le long d'une direction d'alimentation dans laquelle le corps de structure (8) est envoyé, est mise en contact avec l'élément d'alignement,
le placement du corps de structure (8) de manière à chevaucher le système de dispositif de découpe (2) et le système de dispositif d'alimentation (5) ;
l'envoi, par le système de dispositif d'alimentation (5), du corps de structure (8) au système de dispositif de découpe (2) alors que le deuxième corps mobile (50) se déplace vers le premier corps mobile (20) ; et
la découpe, par le système de dispositif de découpe (2), du corps de structure (8) en une pluralité de segments découpés en découpant le corps de structure (8) envoyé par le système de dispositif d'alimentation (5).
